(19) 

Europäisches
Patentamt

European
Patent Office

Office européen
des brevets

(11)  **EP 2 857 537 B1**

(12)  # EUROPEAN PATENT SPECIFICATION

(45) Date of publication and mention
of the grant of the patent:
**25.07.2018   Bulletin 2018/30**

(21) Application number: **13794071.4**

(22) Date of filing: **25.02.2013**

(51) Int Cl.:
*B21C 37/08* (2006.01)　　*B60G 21/055* (2006.01)
*C21D 8/10* (2006.01)　　*C21D 9/08* (2006.01)
*C22C 38/32* (2006.01)　　*B21C 51/00* (2006.01)
*C21D 7/06* (2006.01)　　*C22C 38/00* (2006.01)
*C22C 38/02* (2006.01)　　*C22C 38/04* (2006.01)
*C22C 38/06* (2006.01)　　*C22C 38/28* (2006.01)
*C21D 7/13* (2006.01)　　*C21D 9/50* (2006.01)
*C22C 38/22* (2006.01)　　*C22C 38/24* (2006.01)
*C22C 38/26* (2006.01)　　*C22C 38/50* (2006.01)

(86) International application number:
**PCT/JP2013/054815**

(87) International publication number:
**WO 2013/175821 (28.11.2013 Gazette 2013/48)**

(54) **HOLLOW STABILIZER, AND STEEL PIPE FOR HOLLOW STABILIZERS AND METHOD FOR PRODUCTION THEREOF**

HOHLER STABILISATOR UND STAHLROHR FÜR HOHLE STABILISATOREN UND VERFAHREN ZUR HERSTELLUNG DAVON

STABILISATEUR CREUX, ET TUYAU D'ACIER POUR STABILISATEURS CREUX ET LEUR PROCÉDÉ DE PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.05.2012   JP 2012119869**

(43) Date of publication of application:
**08.04.2015   Bulletin 2015/15**

(73) Proprietors:
• **Nippon Steel & Sumitomo Metal Corporation
  Tokyo 100-8071 (JP)**
• **NHK Spring Co., Ltd.
  Yokohama-shi, Kanagawa 236-0004 (JP)**

(72) Inventors:
• **ISHITSUKA, Tetsuo
  Tokyo 100-8071 (JP)**
• **KOYUBA, Motofumi
  Tokyo 100-8071 (JP)**
• **IWAMURA, Masamichi
  Tokyo 100-8071 (JP)**

• **TANGE, Akira
  Yokohama-city
  Kanagawa 236-0004 (JP)**
• **TAKAHASHI, Ken
  Yokohama-city
  Kanagawa 236-0004 (JP)**
• **KURIMOTO, Kiyoshi
  Yokohama-city
  Kanagawa 236-0004 (JP)**
• **WAKABAYASHI, Yutaka
  Yokohama-city
  Kanagawa 236-0004 (JP)**

(74) Representative: **Vossius & Partner
  Patentanwälte Rechtsanwälte mbB
  Siebertstrasse 3
  81675 München (DE)**

(56) References cited:
**EP-A1- 1 923 477**　　**EP-A1- 2 239 343**
**JP-A- 2007 270 349**　　**JP-A- 2009 079 280**
**JP-A- 2010 189 758**　　**JP-A- 2010 189 758**

EP 2 857 537 B1

## Description

Technical Field

The present invention relates to a hollow stabilizer used for a vehicle such as an automobile, and a steel pipe for hollow stabilizers used as a material for the hollow stabilizer and a method of producing thereof.

Background Art

Stabilizers are applied to vehicles such as automobiles for the purpose of securing the running stability of vehicle bodies during high speed running while suppressing the rolling of vehicle bodies during cornering. The stabilizer is conventionally manufactured by processing a solid material such as a steel bar into an intended shape. In recent years, hollow stabilizers using a hollow material such as a seamless steel pipe or an electric resistance-welded steel pipe are increasingly used for the purpose of promoting weight reduction.

In the case of changing the design from a solid stabilizer to a hollow stabilizer, the outer diameter of the hollow stabilizer necessarily becomes larger than that of the solid stabilizer in order to maintain the same roll rigidity. As a result, the generated stress with respect to the same load becomes larger in the hollow stabilizer, and therefore, it is necessary to increase a wall thickness/outer diameter (t/D) ratio for suppressing an increase in the generated stress.

Thin-walled hollow stabilizers with a t/D of from 0.10 to 0.17 are conventionally applied to compact cars with low design stresses. However, in order to apply hollow stabilizers to a large car with a high design stress, t/D is required to be increased. For this purpose, a method of producing a hollow stabilizer in which an electric resistance-welded steel pipe is subjected to diameter-reduction hot rolling and then drawing (for example, see Patent Document 1), and a thick-walled steel pipe for hollow stabilizers produced by subjecting an electric resistance-welded steel pipe to diameter-reduction hot rolling (for example, see Patent Document 2) have been suggested.

In the case of the hollow stabilizer, fatigue fracture was sometimes generated from the inner surface which is absent in the solid stabilizer. This is because fatigue fracture is generated from a decarburized layer on the inner surface even when the fatigue strength of the outer surface of the steel pipe is improved by increasing the strength to the steel pipe. In order to solve this problem, a steel pipe for hollow stabilizers in which the t/D is 0.20 or more and the generation of the decarburized layer on the inner surface is suppressed has been suggested (for example, see Patent Document 3).

Patent Document 1: Japanese Patent Application Laid-Open (JP-A) No. 2000-233625
Patent Document 2: International Publication No. WO 2007-023873
Patent Document 3: JP-A No. 2007-270349

EP 2239343 A1 discloses a method for manufacturing a hollow article from an electric resistance welded steel pipe. JP 2010-189758 A deals with a method for manufacturing a steel pipe superior in fatigue strength.

SUMMARY OF INVENTION

Technical Problem

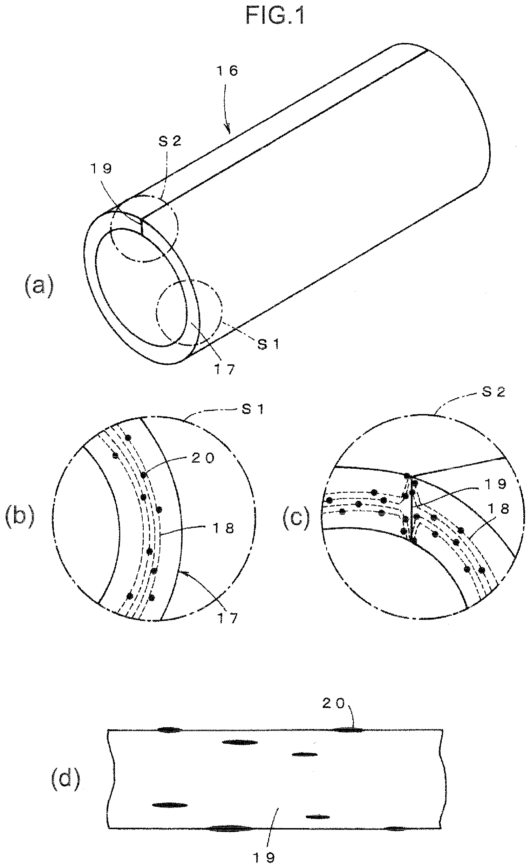

The inventors found that quenching cracks are generated when the C content is increased in order to improve the strength of an electric resistance-welded pipe used as a material for producing hollow stabilizers, and that the deterioration in fatigue strength in the vicinity of the electric resistance-welded portion becomes evident when the material is highly strengthened. Fig. 1 (a) is a perspective view of an electric resistance-welded steel pipe; Fig. 1(b) is a magnified view of a metal flow 18 in a base metal 17, observed in the cross section of an electric resistance-welded steel pipe 16 surrounded by circle S1 in Fig. 1(a); Fig. 1(c) is a magnified view of a metal flow 18 in a welded portion 19, observed in the cross section of the electric resistance-welded steel pipe 16 surrounded by circle S2 in Fig.1(a); and Fig. 1(d) is a magnified view showing a state of presence of MnS in the longitudinal section along the extending direction (L direction) of an electric resistance-welded abutting portion of the electric resistance-welded steel pipe 16. These figures are schematic diagrams. As is clear from a comparison of Figs. 1(b) and 1(c), in the vicinity of the electric resistance-welded portion 19, the metal flow 18 is formed such that the center segregation in the steel plate stands perpendicularly, in the wall thickness direction, due to the intensive upset of abutting surfaces during welding. Therefore, in a case in which MnS 20 elongated in a longitudinal direction by rolling is present at the center segregation of the steel plate, elongated MnS 20 occurs on the surface close to the electric resistance-welded portion 19 after cutting off a welding bead as shown in Fig. 1(d) and is an origin of fatigue fracture.

The present invention is made in consideration of the above situation, and the object of the present invention is to provide a hollow stabilizer having higher strength compared to the conventional hollow stabilizers and having excellent fatigue properties and a steel pipe for hollow stabilizers, which is used as a material for the hollow stabilizer.

Solution to Problem

Hollow stabilizers are produced through quenching and tempering for adjusting quality of material. As a result of the study by the inventors, it was found that quenching cracks are generated during quenching in a case in which the C content is too high. However, since the strength is insufficient with a low C content, Cr is added to ensure hardenability in the invention. Furthermore, in order to suppress the deterioration in fatigue strength caused by MnS in the vicinity of the electric resistance-welded portion, it is necessary to restrict Mn, S, Ca, and O. It is preferable to restrict t/D and the thickness of a decarburizing layer in order to suppress the generation of fatigue cracks from the inner surface, and it is more preferable to impart compressive residual stress by shot peening.
The summary of the invention is as follows.

(1) A hollow stabilizer having a chemical composition comprising, as chemical components, in terms of % by mass: 0.26% to 0.30% of C, 0.05% to 0.35% of Si, 0.5% to 1.0% of Mn, 0.05% to 1.0% of Cr, 0.005% to 0.05% of Ti, 0.0005% to 0.005% of B, and 0.0005% to 0.005% of Ca, wherein: Al, P, S, N, and O are limited to 0.08% or less, 0.05% or less, less than 0.0030%, 0.006% or less, and 0.004% or less, respectively, the chemical composition optionally comprises one or more of: 0.05% to 0.5% of Mo, 0.01% to 0.1% of Nb, 0.01% to 0.1% of V, or 0.1% to 1.0% of Ni, a remainder of the chemical composition consists of Fe and unavoidable impurities, a value of a product of the Mn content and the S content is 0.0025 or less, and a critical cooling rate Vc90 represented by the following Equation (1) is 40°C/s or less:

$$\text{Equation (1): } \log Vc90 = 2.94 - 0.75\beta$$

wherein $\beta = 2.7C + 0.4Si + Mn + 0.8Cr + 2.0Mo + 0.8Ni$; and wherein: a metallic structure comprises a tempered martensite, a length of elongated MnS present at a center part in a thickness direction of the hollow stabilizer is 150 $\mu$m or less, a Rockwell C hardness (HRC) is from 40 to 50, a wall thickness/outer diameter ratio is 0.14 or more, and a depth of a decarburized layer at an inner surface part of the hollow stabilizer is 20 $\mu$m or less from the inner surface.
(2) The hollow stabilizer according to (1), further including, in terms of % by mass, one or more of: 0.05% to 0.5% of Mo, 0.01% to 0.1% of Nb, 0.01 % to 0.1% of V, or 0.1% to 1.0% of Ni, wherein, in Equation (1), $\beta = 2.7C + 0.4Si + Mn + 0.8Cr + 2.0Mo + 0.8Ni$.
(3) The hollow stabilizer according to (1) or (2), in which a maximum compressive residual stress on an outer surface is 400 MPa or more.
(4) The hollow stabilizer according to (3), in which the outer surface and the inner surface are subjected to shot peening.
(5) A steel pipe for a hollow stabilizer used as a material for the hollow stabilizer according to any one of claims 1 to 5, the steel pipe having a chemical composition comprising, as chemical components, in terms of % by mass: 0.26% to 0.30% of C, 0.05% to 0.35% of Si, 0.5% to 1.0% of Mn, 0.05% to 1.0% of Cr, 0.005% to 0.05% of Ti, 0.0005% to 0.005% of B, and 0.0005% to 0.005% of Ca, wherein: Al, P, S, N, and O are limited to 0.08% or less, 0.05% or less, less than 0.0030%, 0.006% or less, and 0.004% or less, respectively, the chemical composition optionally comprises one or more of: 0.05% to 0.5% of Mo, 0.01% to 0.1% of Nb, 0.01% to 0.1% of V, or 0.1% to 1.0% of Ni, a remainder of the chemical composition consists of Fe and unavoidable impurities, a value of a product of the Mn content and the S content is 0.0025 or less, and a critical cooling rate Vc90 represented by the following Equation (1) 40°C/s or less:

$$\text{Equation (1): } \log Vc90 = 2.94 - 0.75\beta$$

wherein $\beta = 2.7C + 0.4Si + Mn + 0.8Cr + 2.0Mo + 0.8Ni$;
and wherein: a metallic structure comprises a mixed structure of ferrite and perlite, a length of elongated MnS present at a center part in a thickness direction of the steel pipe is 150 $\mu$m or less, a Rockwell B hardness (HRB) is 95 or less, a wall thickness/outer diameter ratio is 0.14 or more, and a depth of a decarburized layer at an inner surface part of the steel pipe is 20 $\mu$m or less from the inner surface.
(6) A method of producing the steel pipe for a hollow stabilizer according to (5), wherein: the steel pipe is an electric resistance-welded steel pipe, and the method includes a process of subjecting the electric resistance-welded steel pipe to heating, after electric resistance-welding, to a temperature of from 800°C to 1200°C and diameter-reduction hot rolling to a reduction in cross sectional area of from 40% to 80%.

(7) A method of producing the steel pipe for a hollow stabilizer according to (5), wherein: the steel pipe is an electric resistance-welded steel pipe, and the method includes a process of elongating the electric resistance-welded steel pipe by cold-drawing after electric resistance-welding.

Advantageous Effects of Invention

According to the invention, there can be provided a hollow stabilizer for automobiles having an excellent fatigue endurance and higher strength compared to the conventional ones, while maintaining fatigue properties and delayed fracture properties equivalent to those of the conventional hollow stabilizer for automobiles.

BRIEF DESCRIPTION OF DRAWINGS

Figs. 1(a) to 1(c) are diagrams showing the relationship between the surface layer of the electric resistance-welded portion and MnS in the center segregation. Fig. 1(a) shows the electric resistance-welded steel pipe; Fig. 1(b) is magnified view of a metal flow in a base metal, observed in the cross section of an electric resistance-welded steel pipe surrounded by circle S1 in Fig. 1(a); Fig. 1(c) is magnified view of a metal flow in the welded portion, observed in the cross section of the electric resistance-welded steel pipe surrounded by circle S2 in Fig. 1(a); and Fig. 1(d) is magnified view of the longitudinal sectional along the extending direction (L direction) of the electric resistance-welded abutting portion of the electric resistance-welded steel pipe.

Fig. 2 shows an example of the stabilizer.

Figs. 3(a) and 3(b) are diagrams illustrating the method of producing a plate for a plane bending fatigue test specimen from the electric resistance-welded steel pipe. Fig. 3(a) is a perspective view of the electric resistance-welded steel pipe after making a slit in a longitudinal direction; and Fig. 3(b) is a perspective view of the electric resistance-welded steel pipe of Fig. 3(a) developed in a plane.

Figs. 4(a) and 4(b) are diagram illustrating the plane bending fatigue test specimen produced using the plate of Fig. 3(b). Fig.4(a) is a plane view, and Fig. 4(b) is a side view.

Figs. 5(a) and 5(b) show a fracture surface of the specimen after the fatigue test. Fig. 5(a) is the SEM photograph showing the fracture surface of the specimen, and Fig. 5(b) shows the result of the EDX analysis at the position enclosed with the dashed oval in Fig. 5(a).

Fig. 6 is the photograph showing the metal flow of the cross section perpendicular to the fracture surface of the specimen after the fatigue test shown by sticking the photographs at the fracture position.

Fig. 7 show an example of the relationship between the cooling rate and the hardness during quenching.

Fig. 8 shows an example of the process of manufacturing the stabilizer by cold forming.

Fig. 9 shows an example of the process of manufacturing the stabilizer by hot forming.

Fig. 10 shows an example of the temper-softening curve of the steel pipe for hollow stabilizers.

DESCRIPTION OF EMBODIMENTS

*Configuration of Stabilizer*

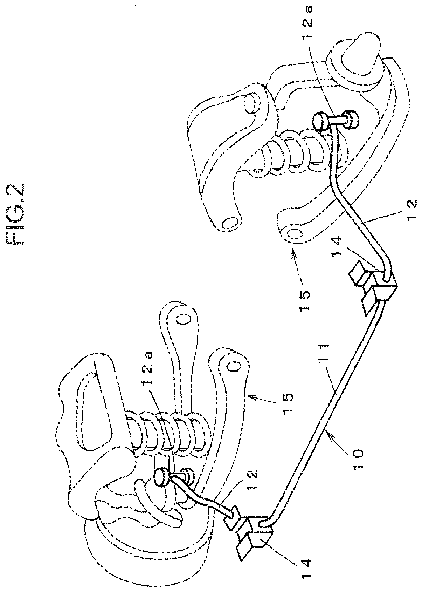

As shown in Fig. 2, a stabilizer 10 includes a torsion portion 11 which is extended in a width direction of a vehicle body (not shown) and a left-and-right pair of arm portions 12 which are connected to either end of the torsion portion 11. The torsion portion 11 is fixed to the body side via a bush 14 or the like. The terminals 12a of the arm portions 12 are connected to suspension mechanisms 15 on the left and right via stabilizer links (not shown) or the like. In the torsion portion 11 and the arm portions 12, several portions or ten or more portions are usually subjected to bending to avoid interference with other components.

When a vehicle turns, an upside down phase force is input to the suspension mechanisms 15. At this time, in the case of a vehicle at which the stabilizer 10 is mounted, the left and right arm portions 12 are bowed in opposite directions and the torsion portion 11 is twisted, and the stabilizer 10 functions as a spring for suppressing excessive inclination (rolling) of the vehicle body. During vehicle travel, straight travel and turning are repeated. Therefore, stabilizers are required to have sufficient hardness and fatigue properties.

Considering that the upper limit of the C content is 0.30%, the hollow stabilizer according to the invention has a maximum hardness of HRC 50 as an achievable hardness and a minimum hardness of HRC 40 which is a substantial upper limit of the conventional material.

In the hollow stabilizer according to the invention, a wall thickness/outer diameter ratio (t/D) is set to 0.14 or more, such that fatigue fracture initiates from the outer surface. In a case in which the t/D is less than 0.14, the difference in stress between the outer surface and the inner surface is small, and thus fatigue fracture tends to initiate form the inner surface at which the pre-existent origin of fatigue fracture is hardly detected. The upper limit of the t/D is not particularly limited. Since the stabilizer with a t/D of 0.5 is theoretically solid, the upper limit of the t/D in the invention is substantially less than 0.5. Since the weight saving effect is reduced and the production becomes hard when the t/D is 0.25 or more, the t/D is preferably less than 0.25 from a practical point of view. Here, each of the HRC and the t/D is a value at a portion not subjected to bending during the production of the hollow stabilizer.

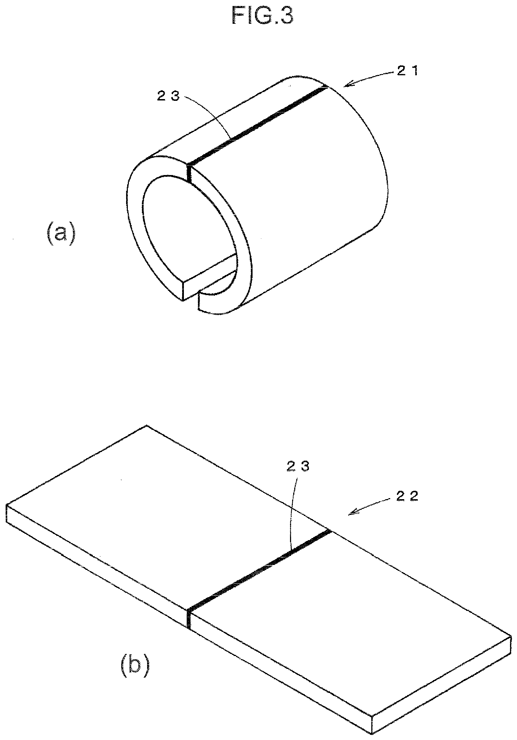

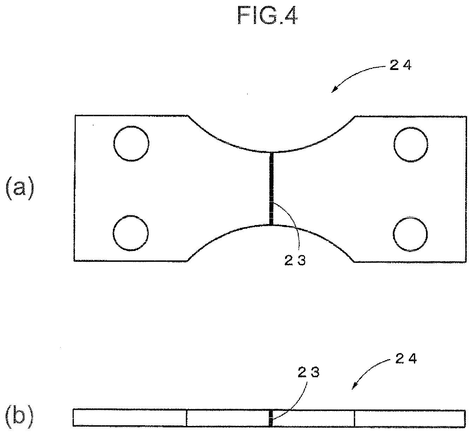

In the electric resistance-welded portion, elongated MnS sometimes is an origin of fatigue fracture. The inventors produced a plate 22 for a plane bending fatigue test specimen from an electric resistance-welded pipe 21 as shown in Figs. 3(a) and 3(b). Further, a plane bending fatigue test was conducted using a specimen 24 in which an electric resistance-welded portion 23 of the electric resistance-welded pipe 21 is located at a central position in a longitudinal direction of the specimen 24 for the plane bending fatigue test, in which the electric resistance-welded portion 23 extends in a direction perpendicular to the longitudinal direction of the specimen 24, as shown in Figs. 4(a) and 4(b). After the test, the fracture surface of the specimen 24 was observed under a scanning electron microscope (SEM), and the composition of an inclusion present at a fracture origin was analyzed using an energy dispersive X-ray spectrometry (EDS) attached to the SEM.

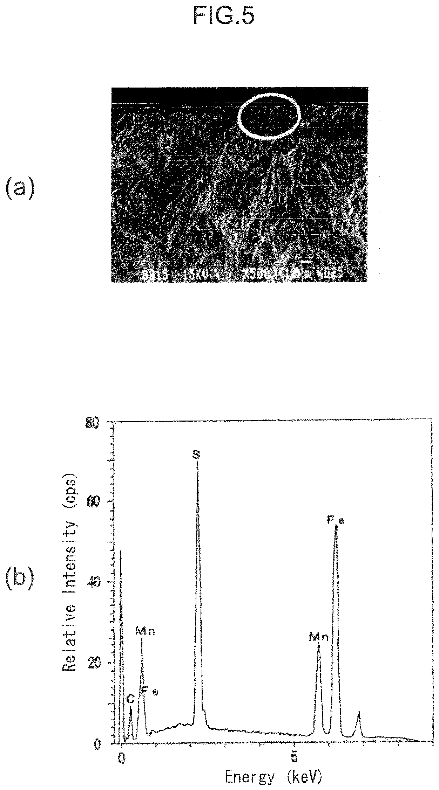

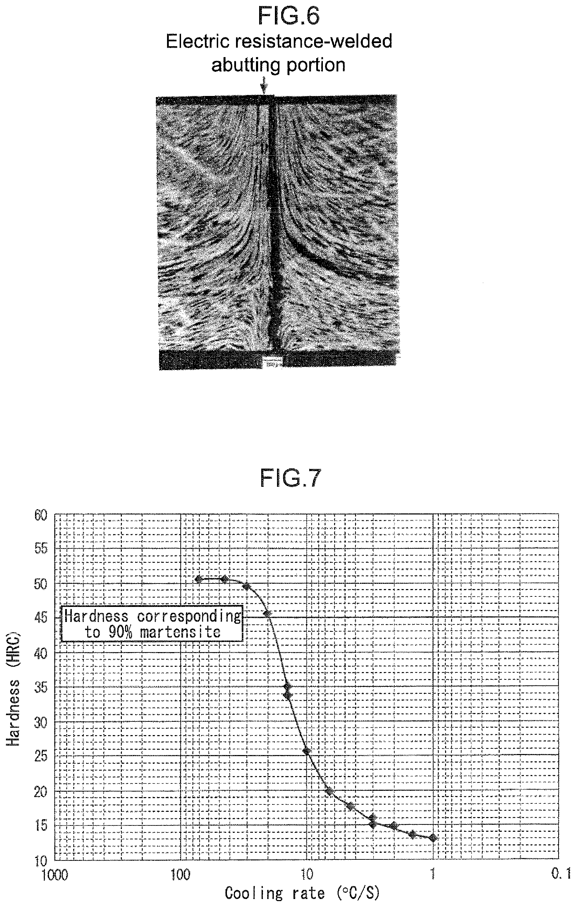

As a result, as shown in Figs. 5(a) and 5(b), it was confirmed that MnS was present at the fracture origin in the fractured specimen. The observation result of metal flow of the cross section perpendicular to the fracture surface of the specimen after the fatigue test is shown in Fig. 6. As shown in Fig. 6, the fracture surface in the specimen was located at a position somewhat removed from the position of the welded portion, rather than the welded portion. It was also confirmed that the surfaces of portions in the vicinity of both sides sandwiching the electric resistance-welded portion therebetween corresponded to the segregation zone located at the center part in a thickness direction of the base metal. Furthermore, as a result of the examination by the inventors, it was found that the length of elongated MnS present at the center part in a thickness direction of the base metal is required to be limited for preventing the generation of fatigue fracture from the electric resistance-welded portion. In order to suppress the stretching of MnS, it is effective to form CaS by the addition of Ca.

In the invention, the length of elongated MnS present at the center part in a thickness direction is set to 150 $\mu$m or less. In a case in which the length of elongated MnS exceeds 150 $\mu$m, elongated MnS serves as an origin of fatigue fracture of the electric resistance-welded portion. Regarding the presence or absence of elongated MnS having a length exceeding 150 $\mu$m, a 10 mm-length segment, as a specimen for observing the cross sectional structure, is cutout from the hollow stabilizer in a longitudinal direction, and at a center part in a thickness direction of the hollow stabilizer present in the cross section of the specimen, the length of MnS is confirmed with an optical microscope. The presence of MnS may be confirmed by electron scanning microscopy together with energy dispersive X-ray spectrometry. Here, "the length of MnS" is determined by observing the center part in a thickness direction present in the cross section with an optical microscope or a scanning electron microscope with respect to 10 samples for each, and measuring the length of MnS having the largest size among the MnS present in the observed region.

Furthermore, in order to suppress the generation of fatigue fracture from the inner surface of the hollow stabilizer, the depth of a decarburized layer at the inner surface part is set to 20 $\mu$m or less from the inner surface. It is preferable to include no decarburized layer since the decarburized layer has lower strength than the base metal and tends to serve as the origin of fatigue fracture. However, in a case in which the t/D is set to 0.14 or more, the generation of fatigue fracture from the inner surface can be prevented by setting the depth of the decarburized layer at the inner surface part to 20 $\mu$m or less. In the hollow stabilizer according to the invention having a tempered martensite structure, the depth of the decarburized layer means a maximum depth from the inner surface of ferrite present at the inner surface.

The grain size of ferrite on the inner surface of the steel pipe for stabilizers before quenching is approximately from 10 $\mu$m to 20 $\mu$m. When the width corresponding to the grain size of the ferrite grains connectively present on the inner surface is regarded as the width of a layer, the depth of the ferrite decarburized layer of the steel pipe can be set to 20 $\mu$m or less by limiting the width of the layer up to the one-layer size. In order to suppress the generation of the decarburized layer, it is preferable to lower a temperature of the inner surface, decrease the holding time, and increase the cooling rate during quenching. By appropriately selecting the quenching condition during the production of the hollow stabilizer, the depth of the decarburized layer can be set to 20 $\mu$m or less. The decarburized layer is formed in the dual phase range during cooling from a high temperature to the room temperature. The dual phase range is a temperature range below the $Ar_3$ transformation temperature at which austenite-to-ferrite transformation starts, and is a temperature range at which austenite and ferrite coexist.

In the hollow stabilizer according to the invention, fatigue strength is improved when compressive residual stress is imparted to the outer surface, and the effect can be obtained significantly when the maximum compressive residual stress on the outer surface is 400 MPa or more. While the stress generated at the inner surface of the hollow stabilizer is lower compared to the outer surface, it is sometimes preferable to impart compressive residual stress to the inner surface in order to improve fatigue endurance. The method of imparting compressive residual stress is not particularly limited, and shot peening is the simplest method. The compressive residual stress can be determined by an X-ray diffraction method.

Hereinbelow, the reason to limit respective components included in the hollow stabilizer according to the invention is explained. Here, "%" indicating the content of respective components means "% by mass".

C is an element that determines the strength of the hollow stabilizer. In order to realize higher strength compared to the conventional hollow stabilizer, it is necessary to set the C content to 0.26% or more. However, when the C content exceeds 0.30%, quenching cracks are generated. Therefore, the upper limit of the C content is set to 0.30%.

Si is a deoxidizing element and contributes to solid-solution strengthening. Si also has the effect of increasing temper-softening resistance. In order to obtain these effects, the content of Si is required to be 0.05% or more. However, when the Si content exceeds 0.35%, toughness is decreased. Therefore, the Si content is set to a range of from 0.05% to 0.35%. It is preferable that the lower limit of the Si content is set to 0.20% and the upper limit of the Si content is set to 0.30%.

Mn is an element that improves hardenability. In a case in which the Mn content is less than 0.5%, the sufficient effect of improving hardenability cannot be ensured. On the other hand, in a case in which the Mn content exceeds 1.0%, delayed fracture properties tends to be deteriorated and MnS easily precipitates, thereby decreasing fatigue strength in the vicinity of the electric resistance-welded portion. Therefore, the Mn content is set to a range of form 0.5% to 1.0%, and preferably to 0.5% or more and less than 0.8%.

P is an element that has an adverse effect on weld crack resistance and toughness. Therefore, the P content is limited to 0.05% or less. The P content is preferably 0.03% or less.

S deteriorates toughness and precipitates as MnS to decrease fatigue strength in the vicinity of the electric resistance-welded portion. Therefore, the S content is limited to less than 0.0030%. The S content is preferably 0.0026% or less.

In the invention, in order to suppress the precipitation of MnS, it is necessary to reduce the S content in relation to the Mn content in addition to reduce the S content alone. In particular, the value of the product of the Mn content and the S content is limited to 0.0025 or less. This is because, in a case in which the value of the product of the Mn content and the S content exceeds 0.0025, sufficient fatigue strength cannot be obtained in the vicinity of the electric resistance-welded portion even when each of the Mn content and the S content satisfies the above appropriate range.

Cr is an element that improves hardenability. In a case in which the Cr content is less than 0.05%, these function and effect cannot be expected sufficiently. In a case in which the Cr content exceeds 1.0%, defects are easily generated during electric resistance-welding. Therefore, the Cr content is set to a range of from 0.05% to 1.0%.

Al is an element that is useful as an agent for deoxidizing a molten steel, and it is preferable to add 0.01% or more of Al. Al is also an element for fixing N and, hence, the Al content has a significant influence on crystal grain sizes and mechanical properties of the steel. In a case in which the Al content exceeds 0.08%, large amounts of non-metallic inclusions are formed and surface defects are easily generated in the final product. Therefore, the Al content is set to 0.08% or less. The Al content is preferably 0.05% or less, and more preferably 0.03% or less.

Ti acts to stably and effectively improve hardenability obtained by the addition of B, by suppressing the precipitation of BN by fixing nitrogen in the steel in the form of TiN. Therefore, in order to satisfy the stoichiometry of TiN, Ti needs to be added in an amount that is at least 3.42 or more times the N content, and the range of the Ti content is also automatically determined based on the range of the N content. However, since some Ti may precipitate to form a carbide, the Ti content is set to be larger than a theoretical value, i.e., a range of from 0.005% to 0.05%, in order to more surely fix N. The Ti content is preferably from 0.01% to 0.02%.

B is an element for significantly enhancing the hardenability of the steel material with addition in a small quantity. However, in a case in which the B content is less than 0.0005%, the effect of improving hardenability cannot be expected. In a case in which the B content exceeds 0.005%, a coarse phase containing B tends to be formed and embrittlement easily occurs. Therefore, the B content is set to a range of from 0.0005% to 0.005%. The B content is preferably from 0.001% to 0.002%.

N is an element that has the function of enhancing steel strength via the precipitation in the form of nitrides or carbonitrides. However, in a B-added steel, a deterioration of hardenability caused by the precipitation of BN, or deterioration of hot workability, fatigue strength, or toughness caused by the precipitation of TiN as a result of Ti added to prevent the precipitation of BN as described above, becomes problematic. On the other hand, TiN has the effect of suppressing the coarsening of $\gamma$-grains at a high temperature to improve toughness. Therefore, in order to achieve an optimum balance between hot workability, fatigue strength, and toughness, the N content is set to 0.006% or less. The N content is preferably from 0.001% to 0.005%, and more preferably from 0.002% to 0.004%.

Ca is an element that improves toughness and that suppresses the reduction of fatigue strength caused by MnS in the vicinity of the electric resistance-welded portion, by the fixation of S in the form of CaS. In a case in which the Ca content is less than 0.0005%, these effects cannot be expected sufficiently. On the other hand, in a case in which the Ca content exceeds 0.005%, toughness is deteriorated due to the increase in oxides in the steel. Therefore, the Ca content is set to a range of from 0.0005% to 0.005%.

O is an element that neutralizes the effect obtained by the addition of Ca via the formation of CaO. Therefore, the O content is limited to 0.004% or less.

The hollow stabilizer according to the invention has the chemical composition including the above essential components, and may further include Mo, Nb, V, and Ni if necessary.

Mo is an element that has the effect of improving hardenability. In a case in which the Mo content is less than 0.05%, the effect cannot be expected sufficiently. On the other hand, in a case in which the Mo content exceeds 0.5%, the alloy cost is increased. Therefore, the Mo content is set to a range of from 0.05% to 0.5%.

Nb has the effect of precipitation strengthening by forming Nb carbonitrides, and also has the effect of improving toughness by reducing the crystal grain size of the steel material. In a case in which the Nb content is less than 0.01%, sufficient effect of improving strength and toughness cannot be obtained. On the other hand, in a case in which the Nb content exceeds 0.1%, more effects cannot be expected and merely the alloy cost is increased. Therefore, the Nb content is set to a range of from 0.01% to 0.1%.

V has the effect of precipitation strengthening by V carbonitrides. In a case in which the V content is less than 0.01%, the effect cannot be expected sufficiently. On the other hand, in a case in which the V content exceeds 0.1%, more effects cannot be expected and merely the alloy cost is increased. Therefore, the V content is set to a range of from 0.01% to 0.1%.

Ni is an element that has the effect of improving hardenability and toughness. In a case in which the Ni content is less than 0.1%, the effect cannot be expected sufficiently. On the other hand, in a case in which the Ni content exceeds 1%, the alloy cost is increased. Therefore, the Ni content is set to a range of from 0.1% to 1.0%.

In the invention, it is necessary to sufficiently ensure the hardenability of the material in order to obtain the hollow stabilizer having a structure composed of martensite. As an index of hardenability, the critical cooling rate Vc90 (°C/s) conventionally known by "TETSU-TO-HAGANE" 74 (1998), P.1073, may be used for example. This is an index represented by the following Equation (1), and means the cooling rate at which the volume ratio of martensite is 90% or more. Therefore, hardenability is higher as Vc90 is lower, and the martensite structure can be obtained even when the cooling rate is reduced.

$$\text{Equation (1): } \log Vc90 = 2.94 - 0.75\beta.$$

Here, $\beta = 2.7C + 0.4Si + Mn + 0.8Cr + 2.0Mo + 0.8Ni$.

The inventors produced electric resistance-welded steel pipes with various compositions and examined the relationship between Vc90 and the hardness after quenching. As a result, it was found that, in a case in which Vc90 is 40°C/s or less, the martensite structure can be surely formed up to the inside by water quenching. For this reason, the upper limit of Vc90 is limited to 40°C/s in the invention. The inventors further examined the relationship between the cooling rate and the Rockwell C hardness at a center part in a thickness direction using the electric resistance-welded steel pipe of steel No. 1 containing 0.30% of C, 0.30% of Si, and 0.35% of Cr and having a Vc90 of 27.1°C/s as shown in Table 1. The Rockwell C hardness (HRC) was measured in accordance with JIS Z 2245. As shown in Fig. 7, in a case in which the cooling rate is 20°C/s or more, the hardness corresponding to that of the structure composed of 90% of martensite can be obtained. Since the cooling rate during water quenching is 20°C/s or more, the structure composed of 90% or more of martensite can be obtained by water quenching.

The metallic structure of the hollow stabilizer according to the invention is limited to a tempered martensite. This is because variation in the structure and hardness is suppressed, and the hardness is easily adjusted. In order to ensure the formation of the martensite structure up to the inside by quenching, Vc90 is set to 40°C/s or less to obtain the sufficient hardenability of the material. Whether the metallic structure of the hollow stabilizer is a tempered martensite or not can be determined by the observation under an optical microscope.

It is preferable that the metallic structure of the steel pipe for hollow stabilizers, which is used as a material for the hollow stabilizer according to the invention, comprises a mixed structure of ferrite and perlite. Whether the metallic structure of the steel pipe for hollow stabilizers comprises a mixed structure of ferrite and perlite or not can be determined by the observation under an optical microscope. The hollow stabilizer is often produced by cold bending of the steel pipe. Therefore, in order to ensure sufficient workability, the Rockwell B hardness (HRB) is preferably 95 or less. In a case in which the metallic structure comprises a mixed structure of ferrite and perlite, workability can be ensured. The Rockwell B hardness (HRB) of the steel pipe for hollow stabilizers can be measured in accordance with JIS Z 2245.

The depth of the ferrite decarburized layer on the inner surface of the steel pipe for hollow stabilizers according to the invention is set to 20 $\mu$m or less. As a result, the depth of the decarburized layer on the inner surface of the hollow stabilizer after quenching can be reduced to less than 20 $\mu$m. Here, the depth of the ferrite decarburized layer is a maximum depth measured from the inner surface of a region at which only ferrite grains are arranged and no cementite is present in an L direction, when the metallic structure of the longitudinal section (L section) of the steel pipe is observed with an optical microscope.

The decarburized layer on the inner surface of the steel pipe for hollow stabilizers is, for example, formed in the dual phase range during cooling to the room temperature after subjecting the electric resistance-welded steel pipe to diameter-reduction hot rolling. The decarburized layer is formed easily on the inner surface of the steel pipe for hollow stabilizers when the steel pipe passes through the dual phase range during cooling from a high temperature at which the metallic structure is composed of an austenite single phase. The decarburized layer has a metallic structure composed of ferrite, since the content of C, which is an element for stabilizing austenite, is reduced therein. In order to suppress the formation of the decarburized layer on the inner surface of the steel pipe for hollow stabilizers, it is preferable to shorten the time required for passing through the dual phase range.

The depth of the decarburized layer generated at the inner surface of the steel pipe for a hollow stabilizer can be reduced to 20 μm or less by, for example, supplying water to the outer surface of the steel pipe obtained by subjecting the electric resistance-welded steel pipe to diameter-reduction hot rolling and adjusting the cooling rate during passage through the dual phase range to 5°C/s or more. While the water for cooling may be supplied only to the outer surface of the steel pipe for hollow stabilizers, it is possible to supply water to the inner surface in addition to the outer surface. By increasing the cooling rate of the inner surface of the steel pipe for hollow stabilizers, the depth of the decarburized layer can be further reduced.

Hereinbelow, the method of producing the steel pipe for hollow stabilizers according to the invention is described. First, a molten steel, smelted to provide a required chemical composition, is casted as a slab, or the molten steel is formed as an ingot and subsequently processed into a billet by hot rolling, and the slab or the billet are then subjected to hot rolling to obtain a hot rolled steel sheet. The hot rolled steel sheet is processed into an electric resistance-welded steel pipe by a method of producing the conventional electric resistance-welded steel pipe, for example, hot or cold electric resistance-welding or high-frequency induction heating. The obtained electric resistance-welded steel pipe may be further subjected to diameter-reduction hot rolling to produce a thick walled steel pipe.

The diameter-reduction rolling may be conducted using a stretch reducer. The stretch reducer is a rolling machine provided with a plurality of rolling stands arranged in series with the rolling axis, the plurality of rolling stands each having 3 or 4 rolls disposed around the rolling axis. The tension in the pipe axis direction (rolling direction) of the steel pipe and the compression force in the circumferential direction of the steel pipe are controlled by adjusting the number of revolutions of the rolls and the rolling force in each of the rolling stands of the rolling machine, whereby the diameter-reduction rolling for increasing the wall thickness/outer diameter ratio can be achieved.

That is, in diameter-reduction rolling, the outer diameter is reduced by the rolling force with respect to the outer diameter of the steel pipe and the wall thickness is increased at the same time. On the other hand, the wall thickness is reduced by tension acting in the pipe axis direction of the steel pipe. Therefore, the final wall thickness is determined by the balance therebetween. Since the wall thickness of the steel pipe obtained by diameter-reduction rolling is mainly determined in accordance with tension between the rolling stands, it is necessary to calculate tension between the rolling stands for obtaining the desired wall thickness based on the rolling theory or the like, and to set the number of revolutions of a roll in each of the rolling stands for exerting the tension.

The diameter-reduction rolling is preferably conducted at a reduction in cross sectional area of from 40% to 80% using the electric resistance-welded steel pipe heated to a temperature of from 800°C to 1200°C. The steel pipe for hollow stabilizers is preferably an electric resistance-welded steel pipe obtained by diameter-reduction hot rolling, but not limited thereto. The steel pipe for hollow stabilizers may be an electric resistance-welded steel pipe as electric resistance-welded state or a drawn pipe obtained by cold drawing after electric resistance-welding.

*Production Example 1 of Stabilizer: Cold Forming*

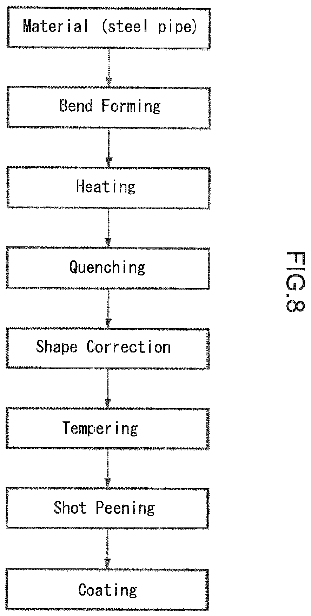

Hereinbelow, production example *1* of the stabilizer is explained with reference to Fig. 8. A steel pipe (e.g., an electric resistance-welded steel pipe, a seamless pipe, a pipe obtained by diameter-reduction hot rolling, or a drawn pipe thereof) cut to a predetermined length is subjected to bend forming (bend forming process) to provide the intended shape shown in Fig. 2. The bend formed steel pipe is heated to an austenitizing temperature region (heating process) by furnace heating or electric heating, or using a high-frequency heater, and then subjected to quenching (quenching process) in water (or another quenching medium). Subsequently, the shape of the heat-deformed stabilizer bar is corrected to an intended stabilizer shape (shape correction process), and is subjected to tempering (tempering process). The tempered pipe is subjected to shot peening (shot peening process) with respect to only the outer surface, or the outer and inner surfaces, and then coated using an intended coating material (coating process). Here, the shape correction (shape correction process) may be omitted if restrained quenching is performed.

*Production Example 2 of Stabilizer: Hot Forming*

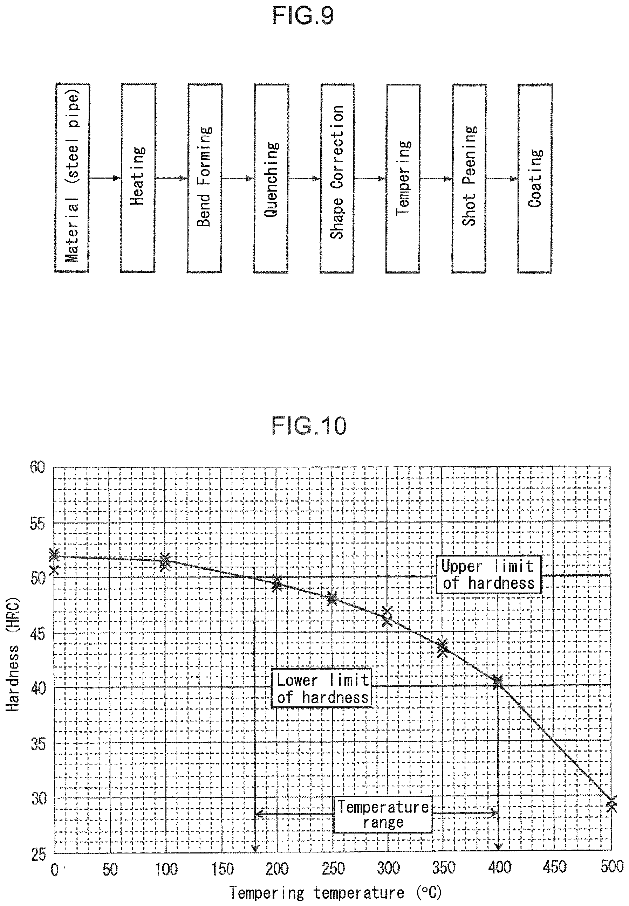

Hereinbelow, production example 2 of the stabilizer is explained with reference to Fig. 9. A steel pipe (e.g., an electric resistance-welded steel pipe, a seamless pipe, a pipe obtained by diameter-reduction hot rolling, or a drawn pipe thereof) cut to a predetermined length is heated to an austenitizing temperature region (heating process) by furnace heating or electric heating, or using a high-frequency heater, and then subjected to bend forming (bend forming process) to provide the intended shape shown in Fig. 2. The bend formed steel pipe is then subjected to quenching (quenching process) in water (or another quenching medium). Subsequently, the shape of the heat-deformed stabilizer bar is corrected to an intended stabilizer shape (shape correction process), and is subjected to tempering (tempering process). The tempered pipe is subjected to shot peening (shot peening process) with respect to only the outer surface, or the outer and inner surfaces, and then coated using an intended coating material (coating process). Here, the shape correction (shape correction process) may be omitted if restrained quenching is performed.

In the hot forming, quenching is performed after bend forming to transform the metallic structure of the hollow stabilizer to martensite. Therefore, it is necessary to finish bend forming at the temperature of transformation point $Ac_3$ or higher. In the quenching after the cold forming, the heating temperature is preferably 900°C or higher, and more preferably 950°C or higher. The tempering temperature is determined based on the temper-softening curve of the steel pipe for hollow stabilizers. Fig. 10 shows the temper-softening curve of the electric resistance-welded steel pipe of steel No. 1 containing 0.30% of C, 0.30% of Si, and 0.35% of Cr and having a Vc90 of 27.1°C as shown in Table 1. The tempering temperature at which the Rockwell C hardness (HRC) of from 40 to 50 is obtained can be determined based on the temper-softening curve shown in Fig. 9.

EXAMPLES

*Example 1*

Hereinbelow, the present invention is described in more detail with reference to the Examples.

Each of steels having the compositions shown in Table 1 was melted and cast into a slab. The slab was then heated to 1200°C and hot-rolled into a steel sheet of 5 mm in thickness at a hot finishing temperature of 890°C and a coiling temperature of 630°C. The obtained steel sheet was slit to a predetermined width, roll-formed into a tubular shape, and then subjected to high frequency electric resistance welding to produce a steel pipe of 90 mm in outer diameter. The obtained electric resistance welded steel pipe was subsequently heated to 980°C by high frequency induction heating and then subjected to diameter reduction rolling, thereby producing a steel pipe (steel pipe for hollow stabilizers) of 30 mm in outer diameter and 4.5 mm in wall thickness (t/D: 0.15) or a steel pipe (steel pipe for hollow stabilizers) of 22 mm in outer diameter and 4.5 mm in wall thickness (t/D: 0.20). Immediately after the diameter reduction rolling, the pipe was water-cooled from the outer surface side at a cooling rate of from 1°C/s to 5 °C/s.

Table 1

| Steel No. | Components (% by mass) | | | | | | | | | | | | | | | | [Mn] ×[S] | Vc90 (°C/s) | Note |
|---|---|---|---|---|---|---|---|---|---|---|---|---|---|---|---|---|---|---|---|
| | C | Si | Mn | P | S | Cr | Ni | Mo | Nb | V | Ti | Al | N | B | Ca | O | | | |
| 1 | 0.30 | 0.30 | 0.80 | 0.006 | 0.0020 | 0.35 | — | — | — | — | 0.017 | 0.020 | 0.0045 | 0.0015 | 0.0021 | 0.0032 | 0.0016 | 27.1 | Adapted steel |
| 2 | 0.28 | 0.22 | 0.81 | 0.010 | 0.0025 | 0.33 | — | — | — | — | 0.015 | 0.020 | 0.0035 | 0.0015 | 0.0019 | 0.0028 | 0.0020 | 31.7 | |
| 3 | 0.26 | 0.29 | 0.77 | 0.007 | 0.0026 | 0.33 | — | — | — | — | 0.016 | 0.022 | 0.0048 | 0.0015 | 0.0019 | 0.0022 | 0.0020 | 35.6 | |
| 4 | 0.28 | 0.34 | 0.64 | 0.009 | 0.0025 | 0.56 | — | — | — | — | 0.015 | 0.022 | 0.0038 | 0.0017 | 0.0025 | 0.0034 | 0.0016 | 28.5 | |
| 5 | 0.28 | 0.30 | 0.95 | 0.005 | 0.0015 | 0.23 | — | — | — | — | 0.012 | 0.020 | 0.0029 | 0.0013 | 0.0020 | 0.0025 | 0.0014 | 27.1 | |
| 6 | 0.28 | 0.30 | 0.79 | 0.013 | 0.0025 | 0.35 | — | — | — | — | 0.020 | 0.021 | 0.0056 | 0.0015 | 0.0025 | 0.0022 | 0.0020 | 30.2 | |
| 7 | 0.28 | 0.30 | 0.79 | 0.013 | 0.0025 | 0.35 | — | — | — | — | 0.020 | 0.021 | 0.0056 | 0.0015 | 0.0025 | 0.0022 | 0.0020 | 30.2 | |
| 8 | 0.30 | 0.30 | 0.80 | 0.006 | 0.0020 | 0.35 | — | — | 0.017 | — | 0.017 | 0.020 | 0.0045 | 0.0015 | 0.0021 | 0.0032 | 0.0016 | 27.1 | |
| 9 | 0.28 | 0.22 | 0.81 | 0.010 | 0.0025 | 0.33 | — | 0.057 | — | — | 0.015 | 0.020 | 0.0035 | 0.0015 | 0.0019 | 0.0028 | 0.0020 | 26.1 | |
| 10 | 0.26 | 0.29 | 0.77 | 0.007 | 0.0026 | 0.33 | 0.19 | — | — | — | 0.016 | 0.022 | 0.0048 | 0.0015 | 0.0019 | 0.0022 | 0.0020 | 27.4 | |
| 11 | 0.28 | 0.34 | 0.64 | 0.009 | 0.0025 | 0.56 | — | — | — | 0.035 | 0.015 | 0.022 | 0.0038 | 0.0017 | 0.0025 | 0.0034 | 0.0016 | 28.5 | |
| 12 | <u>0.22</u> | 0.20 | 0.55 | 0.015 | <u>0.0032</u> | 0.35 | — | — | — | — | 0.015 | 0.029 | 0.0048 | 0.0015 | <u>—</u> | 0.0030 | 0.0018 | <u>64.9</u> | Comparative steel |
| 13 | 0.28 | 0.22 | 0.93 | 0.009 | 0.0028 | 0.35 | — | — | — | — | 0.015 | 0.020 | 0.0045 | 0.0015 | 0.0018 | <u>0.0045</u> | <u>0.0026</u> | 25.1 | |
| 14 | 0.28 | 0.25 | <u>1.10</u> | 0.015 | <u>0.0040</u> | 0.20 | — | — | — | — | 0.015 | 0.030 | 0.0036 | 0.0011 | <u>—</u> | 0.0028 | <u>0.0044</u> | 22.5 | |
| 15 | <u>0.32</u> | 0.25 | <u>1.30</u> | 0.015 | <u>0.0062</u> | 0.33 | — | — | — | — | 0.015 | 0.030 | 0.0044 | 0.0014 | 0.0032 | 0.0022 | <u>0.0081</u> | 11.1 | |

"—" in the table means that the component is not added intentionally.

The underline in the table means that the value is outside the range of the invention.

The metallic structure of the obtained steel pipes for hollow stabilizers were observed under an optical microscope, and it was confirmed that all of the obtained steel pipes have a metallic structure composed of a mixed structure of ferrite and perlite with depth of a decarburized layer at the inner surface of 15 $\mu$m or less. The Rockwell hardness was determined in accordance with JIS Z 2245, and as a result of which the Rockwell hardness of all of the steel pipes for hollow stabilizers found to have a Rockwell B hardness (HRB) of 95 or less. Furthermore, the presence of MnS having a length exceeding 150 μm was confirmed using an optical microscope, an SEM, and an EDS in combination, and as a result of which MnS having a length exceeding 150 μm was present in Comparative Examples of Nos. H to K as shown in Table 2.

The obtained steel pipes for hollow stabilizers were cut at the electric resistance-welded portion or at a position located at 180° opposite side of the electric resistance-welded portion as shown in Fig. 3(a) and cold developed, thereby obtaining a plate-like piece as shown in Fig. 3(b). Furthermore, the steel pipes for hollow stabilizers were heated at 950°C for 10 minutes and water-quenched, and then tempered at different temperature. The Rockwell C hardness (HRC) of the resultant was determined in accordance with JIS Z 2245 to obtain a temper-softening curve.

The plate-like piece obtained by cutting the steel pipe for a hollow stabilizer at a position located at a 180° opposite side of the electric resistance-welded portion and spread out as shown in Figs. 3(a) and 3(b) was processed into a plane bending fatigue test specimen in which the electric resistance-welded portion is located at a central position in a longitudinal direction as shown in Figs. 4(a) and 4(b). In a similar manner, the plate-like piece obtained by cutting the steel pipe for hollow stabilizers at the electric resistance-welded portion and developing was processed into a plane bending fatigue test specimen in which the base metal is located at a central position in a longitudinal direction. In the central position in a longitudinal direction, the thickness (ta) was set to 3 mm and the width (Wa) was set to 15 mm. Each of the specimens was tempered to impart a Rockwell C hardness (HRC) of 40 based on the temper-softening curve, and subjected to a plane bending fatigue test with a fatigue limit of 5 million cycles. The results are shown in Table 2. Here, the holding time for tempering was set to 30 minutes.

From the results shown in Table 2, it was found that each of the steel pipes of Nos. A to K of the examples of the invention has good fatigue properties at the electric resistance-welded portion since the difference in fatigue limit between the base metal and the electric resistance-welded portion is as small as 15 MPa or less. On the other hand, it was found that each of the steel pipes of Nos. L to O of the comparative examples has significantly deteriorated fatigue properties at the electric resistance-welded portion compared to the base metal since the difference in fatigue limit between the base metal and the electric resistance-welded portion is as large as 140 MPa or more. The fracture surface of the specimen after the plane bending fatigue test was observed under an SEM, and the composition of the inclusion present at the fracture origin of fatigue fracture was analyzed using an EDS attached to the SEM. As a result, the presence of MnS at the fracture origin was confirmed in comparative examples L to O in which the electric resistance-welded portion is located at a central position in a longitudinal direction.

Table 2

| Steel pipe No. | Steel No. | Wall thickness (t) mm | Outer diameter (D) mm | t/D ratio | HRB | Metallic structure | Presence of MnS having a length exceeding 150 μm | Depth of decarburized layer in inner surface | Production method | HRC | fatigue limit (MPa) in plane bending fatigue test | | | Note |
|---|---|---|---|---|---|---|---|---|---|---|---|---|---|---|
| | | | | | | | | | | | Base metal B | Electric resistance-welded portion W | Difference (B − W) | |
| A | 1 | 4.5 | 30 | 0.15 | 94 | Ferrite and Perlite | Absent | Absent | Hot rolling | 40 | 480 | 465 | 15 | Example of Invention |
| B | 2 | 4.5 | 30 | 0.15 | 92 | Ferrite and Perlite | Absent | 5 μm | Hot rolling | 40 | 480 | 465 | 15 | |
| C | 3 | 4.5 | 30 | 0.15 | 90 | Ferrite and Perlite | Absent | 10 μm | Hot rolling | 40 | 480 | 465 | 15 | |
| D | 4 | 4.5 | 30 | 0.15 | 92 | Ferrite and Perlite | Absent | Absent | Hot rolling | 40 | 480 | 465 | 15 | |
| E | 5 | 4.5 | 30 | 0.15 | 92 | Ferrite and Perlite | Absent | Absent | Hot rolling | 40 | 480 | 465 | 15 | |
| F | 6 | 4.5 | 30 | 0.15 | 92 | Ferrite and Perlite | Absent | Absent | Hot rolling | 40 | 480 | 465 | 15 | |
| G | 7 | 4.5 | 30 | 0.15 | 92 | Ferrite and Perlite | Absent | Absent | Hot rolling | 40 | 480 | 465 | 15 | |
| H | 8 | 4.5 | 22 | 0.20 | 94 | Ferrite and Perlite | Absent | Absent | Cold drawing | 40 | 480 | 465 | 15 | |
| I | 9 | 4.5 | 30 | 0.15 | 93 | Ferrite and Perlite | Absent | Absent | Hot rolling | 40 | 480 | 470 | 10 | |
| J | 10 | 4.5 | 30 | 0.15 | 91 | Ferrite and Perlite | Absent | Absent | Hot rolling | 40 | 480 | 465 | 15 | |
| K | 11 | 4.5 | 30 | 0.15 | 92 | Ferrite and Perlite | Absent | Absent | Hot rolling | 40 | 480 | 465 | 15 | |
| L | 12 | 4.5 | 30 | 0.15 | 85 | Ferrite and Perlite | Present | 15 μm | Hot rolling | 40 | 485 | 310 | 175 | Comparative Example |
| M | 13 | 4.5 | 30 | 0.15 | 92 | Ferrite and Perlite | Present | Absent | Hot rolling | 40 | 480 | 340 | 140 | |
| N | 14 | 4.5 | 30 | 0.15 | 92 | Ferrite and Perlite | Present | Absent | Hot rolling | 40 | 485 | 300 | 185 | |
| O | 15 | 4.5 | 30 | 0.15 | 95 | Ferrite and Perlite | Present | Absent | Hot rolling | 40 | 480 | 300 | 180 | |
| P | 1 | 4.5 | 30 | 0.15 | 94 | Ferrite and Perlite | Absent | 25 μm | Hot rolling | 40 | 480 | 465 | 15 | |
| Q | 1 | 4.0 | 30 | 0.13 | 94 | Ferrite and Perlite | Absent | Absent | Hot rolling | 40 | 480 | 465 | 15 | |
| R | 1 | 4.5 | 30 | 0.15 | 98 | Ferrite and Bainite | Absent | Absent | Hot rolling | 40 | 480 | 465 | 15 | |

Hot rolling: diameter reduction hot rolling

The underline in the table means that the value is outside the range of the invention.

*Example 2*

A 1000 mm-length segment was cut out from each of the steel pipes A to R produced in Example 1, and cold bended to a 90° angle in a position at 200 mm from the each pipe end, thereby forming to have a U-shape. At this time, the U-shape pipe was formed such that the electric resistance-welded portion was located at the part that can be seen when viewed from the direction giving a U-shaped appearance, that is, along the side surface of the U-shape pipe, thereby obtaining respective Test Materials a to v. The Test Materials a to n (but not Test Material c) as examples of the invention were heated to 950°C for 10 minutes and subjected to water quenching, and then tempered at 200°C for 30 minutes, thereby adjusting the HRC thereof to 49. The Test Material c was heated to 950°C for 10 minutes and subjected to water quenching, and then tempered at 350°C for 30 minutes, thereby adjusting the HRC thereof to 43. Furthermore, with respect to Test Materials a to v, after heating, the outer surface of each Test Material was subjected to shot peening to impart a compressive residual stress on 450 MPa. In addition, with respect to Test Materials b and f, the inner surface thereof was also subjected to shot peening to have compressive residual stress on 450 MPa.

Test Materials r and s were produced using, as a material, the comparative steel (Steel 12 in Table 1) having a typical chemical composition for conventionally used hollow stabilizers, and thus contained low levels of C in the steel and could not achieve an HRC of 49. Therefore, Test Material r was adjusted to have an HRC of 47, which is the upper limit of achievable hardness, and Test Material s was adjusted to have an HRC of 40, which is the upper limit of hardness in practical use.

For comparison, the following test materials using as a material Steel 1, which is an adapted steel shown in Table 1, were prepared: Test Material o in which the depth of the decarburized layer at the inner surface part is 25 μm; Test Material p in which the wall thickness/outer diameter ratio is 0.13; and Test Material q having a bainite structure with a HRC of 35 produced with a cooling rate during quenching of 15°C/s, which is slower compared to the case of water quenching.

Each of Test Materials a to v was fixed at a central position in a longitudinal direction, and fatigue endurance was tested up to 1 million cycles by vibrating respective ends thereof in the opposite direction under a condition of a maximum main stress on the outer surface of the bending portion of 500 MPa. Each test was conducted with respect to 20 samples for each Test Material. The observation of the metallic structure of Test Materials and the measurement of the depth of the decarburized layer at the inner surface part were carried out using an optical microscope. The Rockwell hardness was measured in accordance with JIS Z 2245. The presence of MnS having a length exceeding 150 μm was confirmed using an SEM and an EDS in combination.

As shown in Table 3, in all of Test Materials a to n as examples of the invention, the number of cycles to fatigue exceeded half-million, which meets a standard for fatigue endurance. In Test Materials c to e, g and h in which no shot pinning was performed with respect to the inner surface, breakage was sometimes initiated from the inner surface side, while the number of cycles to fatigue in respective materials exceeded half-million.

On the other hand, in Test Material o in which the depth of the decarburized layer at the inner surface part exceeds 20 μm and Test Material p in which t/D is as small as 0.13, the number of samples exhibiting inner surface breakage is large, and the number of cycles to fatigue was not always reached to half-million, which did not meet a standard for fatigue endurance. In the Test Material q having a bainite structure with an HRC as low as 35, the number of cycles to fatigue was significantly low.

In each of Test Materials r to v as comparative examples produced using the comparative steels, MnS having a length exceeding 150 μm was present in the steel, and therefore, fracturing sometimes occurred at an early stage, from the vicinity of the electric resistance-welded portion on the outer surface, in more than 2 samples among 20 samples.

Table 3

| Test material No. | Steel No. | Steel pipe No. | Wall thick-ness mm | Outer diameter mm | t/D ratio | HRC | Presence of MnS having a length exceeding 150 μm | Structure | Depth of decarburized layer | Shot position | Number of cycles to fatigue at 500 MPa (cycles) | | Number of breakage (number) | | Note |
|---|---|---|---|---|---|---|---|---|---|---|---|---|---|---|---|
| | | | | | | | | | | | minimum | maximum | Outer face | Inner face | |
| a | 1 | A | 4.5 | 30 | 0.15 | 49 | Absent | Tempered martensite | Absent | Outer | >1000000 | >1000000 | 0 | 0 | Example of Invention |
| b | 1 | A | 4.5 | 30 | 0.15 | 49 | Absent | Tempered martensite | Absent | Outer+Inner | >1000000 | >1000000 | 0 | 0 | |
| c | 1 | A | 4.5 | 30 | 0.15 | 43 | Absent | Tempered martensite | Absent | Outer | 946400 | >1000000 | 0 | 1 | |
| d | 2 | B | 4.5 | 30 | 0.15 | 49 | Absent | Tempered martensite | 5 μm | Outer | 788300 | >1000000 | 0 | 2 | |
| e | 3 | C | 4.5 | 30 | 0.15 | 49 | Absent | Tempered martensite | 10 μm | Outer | 675200 | >1000000 | 0 | 4 | |
| f | 3 | C | 4.5 | 30 | 0.15 | 49 | Absent | Tempered martensite | 10 μm | Outer+Inner | >1000000 | >1000000 | 0 | 0 | |
| g | 4 | D | 4.5 | 30 | 0.15 | 49 | Absent | Tempered martensite | Absent | Outer | 866900 | >1000000 | 0 | 1 | |
| h | 5 | E | 4.5 | 30 | 0.15 | 49 | Absent | Tempered martensite | Absent | Outer | 911200 | >1000000 | 0 | 1 | |
| i | 6 | F | 4.5 | 30 | 0.15 | 49 | Absent | Tempered martensite | Absent | Outer | >1000000 | >1000000 | 0 | 0 | |
| j | 7 | G | 4.5 | 30 | 0.15 | 49 | Absent | Tempered martensite | Absent | Outer | >1000000 | >1000000 | 0 | 0 | |
| k | 8 | H | 4.5 | 22 | 0.20 | 49 | Absent | Tempered martensite | Absent | Outer | >1000000 | >1000000 | 0 | 0 | |
| l | 9 | I | 4.5 | 30 | 0.15 | 49 | Absent | Tempered martensite | Absent | Outer | >1000000 | >1000000 | 0 | 0 | |
| m | 10 | J | 4.5 | 30 | 0.15 | 49 | Absent | Tempered martensite | Absent | Outer | >1000000 | >1000000 | 0 | 0 | |
| n | 11 | K | 4.5 | 30 | 0.15 | 49 | Absent | Tempered martensite | Absent | Outer | >1000000 | >1000000 | 0 | 0 | |
| o | 1 | P | 4.5 | 30 | 0.15 | 49 | Absent | Tempered martensite | 25 μm | Outer | 483900 | >1000000 | 0 | 6 | Comparative Example |
| p | 1 | Q | 4.0 | 30 | 0.13 | 49 | Absent | Tempered martensite | Absent | Outer | 455600 | >1000000 | 0 | 17 | |
| q | 1 | R | 4.5 | 30 | 0.15 | 35 | Absent | Bainite | Absent | Outer | 78600 | 91200 | 20 | 0 | |
| r | 12 | L | 4.5 | 30 | 0.15 | 47 | Present | Tempered martensite | 15 μm | Outer | 262700 | 875200 | 16 | 4 | |
| s | 12 | L | 4.5 | 30 | 0.15 | 40 | Present | Tempered martensite | 15 μm | Outer | 162700 | 512700 | 20 | 0 | |
| t | 13 | M | 4.5 | 30 | 0.15 | 49 | Present | Tempered martensite | Absent | Outer | 255000 | >1000000 | 2 | 2 | |
| u | 14 | N | 4.5 | 30 | 0.15 | 49 | Present | Tempered martensite | Absent | Outer | 283000 | >1000000 | 2 | 0 | |
| v | 15 | O | 4.5 | 30 | 0.15 | 49 | Present | Tempered martensite | Absent | Outer | 122700 | >1000000 | 2 | 1 | |

"t/D ratio": wall thickness/outer diameter ratio; "Outer": outer surface; and "Outer+Inner": outer surface and inner surface.

The underline in the table means that the value is outside the range of the invention.

INDUSTRIAL APPLICABILITY

According to the invention, there can be provided a hollow stabilizer for automobiles having an excellent fatigue endurance and higher strength compared to the conventional ones, while maintaining fatigue properties and delayed fracture properties equivalent to those of the conventional hollow stabilizers for automobiles. Such a hollow stabilizer can contribute considerably to weight reduction in automobiles.

DESCRIPTION OF REFERENCE NUMERALS

10: stabilizer
11: torsion portion
12: arm portion
12a: terminal (of arm portion)
14: bush
15: suspension mechanism
16: electric resistance-welded steel pipe
17: base metal
18: metal flow
19: welded portion
20: MnS
21: electric resistance-welded steel pipe
22: plate for plane bending fatigue test specimen
23: electric resistance-welded portion
24: fatigue test specimen

Claims

1.   A hollow stabilizer having a chemical composition comprising, as chemical components, in terms of % by mass:

0.26% to 0.30% of C,

0.05% to 0.35% of Si,
0.5% to 1.0% of Mn,
0.05% to 1.0% of Cr,
0.005% to 0.05% of Ti,
0.0005% to 0.005% of B, and
0.0005% to 0.005% of Ca,

wherein:

Al, P, S, N, and O are limited to 0.08% or less, 0.05% or less, less than 0.0030%, 0.006% or less, and 0.004% or less, respectively,
the chemical composition optionally comprises one or more of:
0.05% to 0.5% of Mo,
0.01% to 0.1% of Nb,
0.01% to 0.1% of V, or
0.1 % to 1.0% of Ni,
a remainder of the chemical composition consists of Fe and unavoidable impurities,
a value of a product of the Mn content and the S content is 0.0025 or less, and
a critical cooling rate Vc90 represented by the following Equation (1) is 40°C/s or less:

$$\text{Equation (1): } \log Vc90 = 2.94 - 0.75\beta$$

wherein $\beta$ = 2.7C + 0.4Si + Mn + 0.8Cr + 2.0Mo + 0.8Ni; and wherein:

a metallic structure comprises a tempered martensite,
a length of elongated MnS present at a center part in a thickness direction of the hollow stabilizer is 150 $\mu$m or less,
a Rockwell C hardness (HRC) is from 40 to 50,
a wall thickness/outer diameter ratio is 0.14 or more, and
a depth of a decarburized layer at an inner surface part of the hollow stabilizer is 20 $\mu$m or less from the inner surface.

2. The hollow stabilizer according to claim 1, further comprising, in terms of % by mass, one or more of:

0.05% to 0.5% of Mo,
0.01% to 0.1% of Nb,
0.01% to 0.1% of V, or
0.1% to 1.0% of Ni,
wherein, in Equation (1), $\beta$ = 2.7C + 0.4Si + Mn + 0.8Cr + 2.0Mo + 0.8Ni.

3. The hollow stabilizer according to claim 1 or 2, wherein a maximum compressive residual stress on an outer surface is 400 MPa or more.

4. The hollow stabilizer according to claim 3, wherein the outer surface and the inner surface are subjected to shot peening.

5. A steel pipe for a hollow stabilizer used as a material for the hollow stabilizer according to any one of claims 1 to 4, the steel pipe having a chemical composition comprising, as chemical components, in terms of % by mass:

0.26% to 0.30% of C,
0.05% to 0.35% of Si,
0.5% to 1.0% of Mn,
0.05% to 1.0% of Cr,
0.005% to 0.05% of Ti,
0.0005% to 0.005% of B, and
0.0005% to 0.005% of Ca,

wherein:

Al, P, S, N, and O are limited to 0.08% or less, 0.05% or less, less than 0.0030%, 0.006% or less, and 0.004% or less, respectively,
the chemical composition optionally comprises one or more of:
0.05% to 0.5% of Mo,
0.01% to 0.1% of Nb,
0.01% to 0.1% of V, or
0.1% to 1.0% of Ni,
a remainder of the chemical composition consists of Fe and unavoidable impurities,
a value of a product of the Mn content and the S content is 0.0025 or less, and
a critical cooling rate Vc90 represented by the following Equation (1) is 40°C/s or less:

$$\text{Equation (1): } \log \text{Vc90} = 2.94 - 0.75\beta$$

wherein $\beta$ = 2.7C + 0.4Si + Mn + 0.8Cr + 2.0Mo + 0.8Ni;
and wherein:

a metallic structure comprises a mixed structure of ferrite and perlite,
a length of elongated MnS present at a center part in a thickness direction of the steel pipe is 150 $\mu$m or less,
a Rockwell B hardness (HRB) is 95 or less,
a wall thickness/outer diameter ratio is 0.14 or more, and
a depth of a decarburized layer at an inner surface part of the steel pipe is 20 $\mu$m or less from the inner surface.

6. A method of producing the steel pipe for a hollow stabilizer according to claim 5, wherein:

the steel pipe is an electric resistance-welded steel pipe; and
the method comprises a process of subjecting the electric resistance-welded steel pipe to heating, after electric resistance-welding, to a temperature of from 800°C to 1200°C and diameter-reduction hot rolling to a reduction in cross sectional area of from 40% to 80%.

7. A method of producing the steel pipe for a hollow stabilizer according to claim 5, wherein:

the steel pipe is an electric resistance-welded steel pipe; and
the method comprises a process of elongating the electric resistance-welded steel pipe by cold-drawing after electric resistance-welding.

**Patentansprüche**

1. Ein hohler Stabilisator mit einer chemischen Zusammensetzung, umfassend, als chemische Bestandteile, bezogen auf Massen-%:

0,26% bis 0,30% C,
0,05% bis 0,35% Si,
0,5% bis 1,0% Mn,
0,05% bis 1,0% Cr,
0,005% bis 0,05% Ti,
0,0005% bis 0,005% B, und
0,0005% bis 0,005% Ca,

wobei:

Al, P, S, N und O jeweils auf 0,08% oder weniger, 0,05% oder weniger, weniger als 0,0030%, 0,006% oder weniger, und 0,004% oder weniger beschränkt sind,
die chemische Zusammensetzung gegebenenfalls eines oder mehrere von: 0,05% bis 0,5% Mo,

0,01% bis 0,1% Nb,
0,01% bis 0,1% V, oder
0,1% bis 1,0% Ni umfasst,
ein Rest der chemischen Zusammensetzung aus Fe und unvermeidbaren Verunreinigungen besteht,
ein Wert eines Produkts des Mn-Gehalts und des S-Gehalts 0,0025 oder weniger beträgt, und eine kritische Abkühlungsgeschwindigkeit Vc90, dargestellt durch die folgende Gleichung (1), 40°C/s oder weniger beträgt:

$$\text{Gleichung (1): } \log Vc90 = 2{,}94 - 0{,}75\beta$$

wobei $\beta$ = 2,7C + 0,4Si + Mn + 0,8Cr + 2,0Mo + 0,8Ni; und wobei:
eine metallische Struktur einen getemperten Martensit umfasst,
eine Länge eines elongierten MnS, welches in einem Mittelteil in einer Dickenrichtung des hohlen Stabilisators vorliegt, 150 $\mu$m oder weniger beträgt,
eine Rockwell-C-Härte (HRC) 40 bis 50 beträgt,
ein Wanddicke/Außendurchmesserverhältnis 0,14 oder mehr beträgt, und
eine Tiefe einer decarbonisierten Schicht an einem inneren Oberflächenteil des hohlen Stabilisators 20 $\mu$m oder weniger von der inneren Oberfläche beträgt.

2. Der hohle Stabilisator gemäß Anspruch 1, ferner umfassend, bezogen auf Massen-%, eines oder mehrere von:

0,05% bis 0,5% Mo,
0,01% bis 0,1% Nb,
0,01% bis 0,1% V, oder
0,1% bis 1,0% Ni,
wobei in Gleichung (1), $\beta$ = 2,7C + 0,4Si + Mn + 0,8Cr + 2,0Mo + 0,8Ni.

3. Der hohle Stabilisator gemäß Anspruch 1 oder 2, wobei eine maximale Druckeigenspannung an einer äußeren Oberfläche 400 MPa oder mehr beträgt.

4. Der hohle Stabilisator gemäß Anspruch 3, wobei die äußere Oberfläche und die innere Oberfläche einem Kugelstrahlen unterzogen sind.

5. Ein Stahlrohr für einen hohlen Stabilisator, welches als ein Material für den hohlen Stabilisator gemäß einem der Ansprüche 1 bis 4 verwendet wird, wobei das Stahlrohr eine chemische Zusammensetzung, umfassend, als chemische Bestandteile, bezogen auf Massen-%: 0,26% bis 0,30% C,

0,05% bis 0,35% Si,
0,5% bis 1,0% Mn,
0,05% bis 1,0% Cr,
0,005% bis 0,05% Ti,
0,0005% bis 0,005% B und 0,0005% bis 0,005% Ca,

wobei:

Al, P, S, N und O jeweils auf 0,08% oder weniger, 0,05% oder weniger, weniger als 0,0030%, 0,006% oder weniger, und 0,004% oder weniger beschränkt sind,
die chemische Zusammensetzung gegebenenfalls eines oder mehrere von: 0,05% bis 0,5% Mo,
0,01% bis 0,1% Nb,
0,01% bis 0,1% V, oder
0,1% bis 1,0% Ni umfasst,
ein Rest der chemischen Zusammensetzung aus Fe und unvermeidbaren Verunreinigungen besteht,
ein Wert eines Produkts des Mn-Gehalts und des S-Gehalts 0,0025 oder weniger beträgt, und
eine kritische Abkühlungsgeschwindigkeit Vc90, dargestellt durch die folgende Gleichung (1), 40°C/s oder weniger beträgt:

$$\text{Gleichung (1): } \log Vc90 = 2{,}94 - 0{,}75\beta,$$

wobei $\beta$ = 2,7C + 0,4Si + Mn + 0,8Cr + 2,0Mo + 0,8Ni;
und wobei:

eine metallische Struktur eine gemischte Struktur aus Ferrit und Perlit umfasst,
eine Länge eines elongierten MnS, welches in einem Mittelteil in einer Dickenrichtung des Stahlrohrs vorliegt, 150 $\mu$m oder weniger beträgt,
eine Rockwell-B-Härte (HRB) 95 oder weniger beträgt,
ein Wanddicke/Außendurchmesserverhältnis 0,14 oder mehr beträgt, und
eine Tiefe einer decarbonisierten Schicht an einem inneren Oberflächenteil des Stahlrohrs 20 $\mu$m oder weniger von der inneren Oberfläche beträgt.

6. Ein Verfahren zur Herstellung des Stahlrohrs für einen hohlen Stabilisator gemäß Anspruch 5, wobei: das Stahlrohr ein elektrisch widerstandsgeschweißtes Stahlrohr ist; und das Verfahren einen Vorgang des Aussetzens des elektrisch widerstandsgeschweißten Stahlrohrs einer Erwärmung, nach dem elektrischen Widerstandsschweißen, auf eine Temperatur von 800°C bis 1200°C und Warmwalzen mit Durchmesserverringerung auf eine Verringerung in der Querschnittsfläche von 40% bis 80%.

7. Ein Verfahren zur Herstellung des Stahlrohrs für einen hohlen Stabilisator gemäß Anspruch 5, wobei: das Stahlrohr ein elektrisch widerstandsgeschweißtes Stahlrohr ist; und das Verfahren einen Vorgang der Dehnung des elektrisch widerstandsgeschweißten Stahlrohrs durch Kaltziehen nach dem elektrischen Widerstandsschweißen umfasst.

**Revendications**

1. Stabilisateur creux ayant une composition chimique comprenant, en tant que composants chimiques, en termes de pourcentage en masse :

0,26 % à 0,30 % de C,
0,05 % à 0,35 % de Si,
0,5 % à 1,0 % de Mn,
0,05 % à 1,0 % de Cr,
0,005 % à 0,05 % de Ti,
0,0005 % à 0,005 % de B, et
0,0005 % à 0,005% de Ca,

dans lequel :

les teneurs en Al, P, S, N et O sont limitées à 0,08 % ou moins, 0,05 % ou moins, moins de 0,0030 %, 0,006 % ou moins et 0,004 % ou moins, respectivement,
la composition chimique comprend éventuellement un ou plusieurs de :

0,05 % à 0,5 % de Mo,
0,01 % à 0,1 % de Nb,
0,01 % à 0,1 % de V, ou
0,1 % à 1,0 % de Ni,
le reste de la composition chimique est constitué de Fe et d'impuretés inévitables,
une valeur d'un produit de la teneur en Mn et de la teneur en S est de 0,0025 ou moins, et
une vitesse critique de refroidissement Vc90 représentée par l'équation suivante (1) est de 40 °C/s ou moins :

$$\text{Equation (1) : } \log Vc90 = 2{,}94 - 0{,}75\,\beta$$

dans laquelle $\beta$ = 2,7 C + 0,4 Si + Mn + 0,8 Cr + 2,0 Mo + 0,8 Ni ;

et dans lequel :

une structure métallique comprend une martensite revenue,
une longueur de MnS étiré présent au niveau d'une partie centrale dans une direction de l'épaisseur du stabilisateur creux est de 150 μm ou moins,
une dureté Rockwell C (HRC) est de 40 à 50,
un rapport épaisseur de paroi/diamètre externe est de 0,14 ou plus, et
une profondeur d'une couche décarburée au niveau d'une partie de surface interne du stabilisateur creux est de 20 μm ou moins depuis la surface interne.

2. Stabilisateur creux selon la revendication 1, comprenant en outre, en termes de pourcentage en masse, un ou plusieurs de :

0,05 % à 0,5 % de Mo,
0,01 % à 0,1 % de Nb,
0,01 % à 0,1 % de V, ou
0,1 % à 1,0 % de Ni,
dans lequel, dans l'équation (1), β = 2,7 C + 0,4 Si + Mn + 0,8 Cr + 2,0 Mo + 0,8 Ni.

3. Stabilisateur creux selon la revendication 1 ou 2, dans lequel une contrainte résiduelle de compression maximale sur une surface externe est de 400 MPa ou plus.

4. Stabilisateur creux selon la revendication 3, dans lequel la surface externe et la surface interne sont soumises à un grenaillage.

5. Tuyau d'acier pour stabilisateur creux utilisé en tant que matériau pour le stabilisateur creux selon l'une quelconque des revendications 1 à 4, le tuyau d'acier ayant une composition chimique comprenant, en tant que composants chimiques, en termes de pourcentage en masse :

0,26 % à 0,30 % de C,
0,05 % à 0,35 % de Si,
0,5 % à 1,0 % de Mn,
0,05 % à 1,0 % de Cr,
0,005 % à 0,05 % de Ti,
0,0005 % à 0,005 % de B, et
0,0005 % à 0,005% de Ca,

dans lequel :

les teneurs en Al, P, S, N et O sont limitées à 0,08 % ou moins, 0,05 % ou moins, moins de 0,0030 %, 0,006 % ou moins, et 0,004 % ou moins, respectivement,
la composition chimique comprend éventuellement un ou plusieurs de :

0,05 % à 0,5 % de Mo,
0,01 % à 0,1 % de Nb,
0,01 % à 0,1 % de V, ou
0,1 % à 1,0 % de Ni,
le reste de la composition chimique est constitué de Fe et d'impuretés inévitables,
une valeur d'un produit de la teneur en Mn et de la teneur en S est de 0,0025 ou moins, et
une vitesse critique de refroidissement Vc90 représentée par l'équation suivante (1) est de 40 °C/s ou moins :

$$\text{Equation (1) : } \log Vc90 = 2{,}94 - 0{,}75\ \beta$$

dans laquelle β = 2,7 C + 0,4 Si + Mn + 0,8 Cr + 2,0 Mo +0,8 Ni ;
et dans laquelle :

une structure métallique comprend une structure mixte de ferrite et de perlite,

une longueur de MnS étiré présent au niveau d'une partie centrale dans une direction de l'épaisseur du tuyau d'acier est de 150 $\mu$m ou moins,

une dureté Rockwell B (HRB) est de 95 ou moins,

un rapport épaisseur de paroi/diamètre externe est de 0,14 ou plus, et

une profondeur d'une couche décarburée dans une partie de surface interne du tuyau d'acier est de 20 $\mu$m ou moins depuis la surface interne.

6. Procédé de production du tuyau d'acier pour un stabilisateur creux selon la revendication 5, dans lequel :

le tuyau d'acier est un tuyau d'acier soudé par résistance électrique ; et

le procédé comprend un processus de soumission du tuyau d'acier soudé par résistance électrique à un chauffage, après soudage par résistance électrique, à une température de 800 °C à 1200 °C et de laminage à chaud en vue d'une réduction du diamètre pour une réduction de la surface en section transversale de 40 % à 80 %.

7. Procédé de production du tuyau d'acier pour un stabilisateur creux selon la revendication 5, dans lequel :

le tuyau d'acier est un tuyau d'acier soudé par résistance électrique ; et

le procédé comprend un processus d'étirement du tuyau d'acier soudé par résistance électrique par étirage à froid après soudage par résistance électrique.

# FIG.1

(a)

(b)

(c)

(d)

FIG.2

# FIG.3

(a)

(b)

FIG.4

(a)

24

23

(b)

23

24

# FIG.5

(a)

(b)

## FIG.6
### Electric resistance-welded
### abutting portion

## FIG.7

Hardness corresponding to 90% martensite

FIG.8

Material (steel pipe) → Bend Forming → Heating → Quenching → Shape Correction → Tempering → Shot Peening → Coating

# FIG.9

Material (steel pipe) → Heating → Bend Forming → Quenching → Shape Correction → Tempering → Shot Peening → Coating

# FIG.10

**REFERENCES CITED IN THE DESCRIPTION**

**Patent documents cited in the description**

- JP 2000233625 A
- WO 2007023873 A
- JP 2007270349 A
- EP 2239343 A1
- JP 2010189758 A